# FASCICULE DE BREVET EUROPEEN

(11) **EP 3 838 655 B1**
(45) Date de publication et mention de la délivrance du brevet: **26.11.2025**
(21) Numéro de dépôt: 20214265.9
(22) Date de dépôt: 15.12.2020
(51) Int. Cl.: B60L 50/64, H01M 10/42, H01M 50/157, H01M 50/171, H01M 50/197, H01M 50/249, B60L 3/00

(54) **BOÎTIER POUR UNE BATTERIE ET PROCÉDÉ D'INTRODUCTION D'UN FLUIDE D'EXTINCTION DANS UN TEL BOÎTIER**
GEHÄUSE FÜR EINE BATTERIE UND VERFAHREN ZUM EINBRINGEN EINER LÖSCHFLÜSSIGKEIT IN EIN SOLCHES GEHÄUSE
HOUSING FOR A BATTERY AND METHOD FOR INJECTING AN EXTINGUISHING FLUID INTO SUCH A HOUSING

(30) Priorité: 20.12.2019 FR 1915246
(43) Date de publication de la demande: 23.06.2021
(73) Titulaire: Ampere SAS, 92100 Boulogne-Billancourt (FR)
(72) Inventeur: RAT, Natalie, 75015 PARIS (FR); D'HERLINCOURT, Pauline, 92100 BOULOGNE-BILLANCOURT (FR); MICHEL, Philippe, 78390 Bois d'Arcy (FR); ORIGUCHI, Masato, 78120 Rambouillet (FR)
(74) Mandataire: Renault Group

(56) Documents cités:
- EP-A1- 2 861 441
- EP-B1- 2 861 441
- US-A1- 2015 056 481

## Description

L'invention concerne un boîtier pour une batterie. L'invention porte aussi sur un pack batterie comprenant un tel boîtier. L'invention porte encore sur un véhicule automobile comprenant un tel boîtier. L'invention porte enfin sur procédé d'introduction d'un fluide d'extinction dans un tel boîtier.

Certains véhicules automobiles, notamment les véhicules à motorisation électrique ou hybride, comprennent une batterie d'alimentation de puissance pour alimenter en énergie électrique le moteur électrique, notamment d'entraînement.

Une batterie d'alimentation de puissance d'un véhicule à motorisation électrique ou hybride est par exemple de type Lithium-ion (Li-ion). Une telle batterie comprend des cellules électrochimiques comprenant un électrolyte. Une telle batterie comprend généralement plusieurs modules batterie ou ensembles de cellules électrochimiques. La batterie est entourée par un boîtier.

De telles batteries d'alimentation de puissance d'un véhicule à motorisation électrique ou hybride peuvent prendre feu, par exemple suite à un accident de la route ou à un acte de vandalisme, ou de façon très hautement improbable suite à une défaillance interne de la batterie. Le très fort dégagement de chaleur à proximité de la batterie peut déclencher un phénomène d'emballement thermique à l'intérieur des cellules électrochimiques. Sauf si l'on met en œuvre des moyens de protection comme ceux déjà mis en œuvre par la demanderesse, celles-ci peuvent alors s'enflammer à leur tour à l'intérieur de la batterie. Un tel feu d'origine chimique est très difficile à éteindre, surtout s'il est confiné dans le boîtier de la batterie. Il en résulte un risque d'explosion de la batterie, sauf si l'on met en œuvre des moyens de protection comme ceux déjà mis en œuvre par la demanderesse. En outre, les cellules électrochimiques peuvent émettre des liquides et/ou des gaz toxiques et inflammables.

Pour éteindre un feu d'une telle batterie, une solution consiste à « noyer» la batterie en injectant un fluide d'extinction, notamment de l'eau, à l'intérieur du boîtier de la batterie.

On connaît des documents FR1902568, EP2861441 et US2015/056481 un boîtier pour une batterie et un procédé d'introduction d'un fluide d'extinction dans un tel boîtier qui permet d'utiliser la force exercée par le jet d'une lance à incendie pour ouvrir une zone du boîtier prévue à cet effet, donnant un accès direct à l'intérieur du boîtier de la batterie pour que les pompiers puissent la remplir d'eau.

Toutefois, ces solutions présentent des inconvénients. En particulier, ces solutions présentent un coût élevé.

Le but de l'invention est de fournir un boîtier pour une batterie et un procédé d'introduction d'un fluide d'extinction dans un tel boîtier remédiant aux inconvénients ci-dessus et améliorant les dispositifs et procédés d'extinction de feu d'une batterie connus de l'art antérieur. En particulier, l'invention permet de réaliser un boîtier pour une batterie d'un véhicule automobile et un procédé d'introduction d'un fluide d'extinction dans un tel boîtier qui présente un coût réduit et qui permette de préserver la sécurité des passagers du véhicule en empêchant l'entrée de fumées et du feu dans l'habitacle le plus longtemps possible, et en résistant aux températures élevées résultant d'un feu d'une batterie.

Selon l'invention, un boîtier selon la revendication 1 est prévu.

Selon un mode de réalisation, le moyen d'étanchéité peut comprendre une feuille comprenant du Mica.

La feuille peut être collée par un autre adhésif sur la face intérieure de l'enveloppe où est ménagée l'ouverture.

Une couche d'air peut être maintenue entre la feuille et l'opercule, l'épaisseur de la couche d'air étant par exemple de l'ordre de 4 mm.

Selon un autre mode de réalisation, le moyen d'étanchéité peut comprendre au moins un crochet et/ou au moins un moyen de rappel élastique, par exemple un ressort.

L'au moins un crochet et/ou l'au moins un moyen de rappel élastique peut être configuré pour libérer l'opercule lorsqu'une force supérieure à un seuil prédéfini, notamment 130 **N,** s'exerce sur la surface externe du dispositif d'obturation située du côté extérieur du boîtier.

L'invention porte aussi sur un pack batterie, notamment d'alimentation de puissance d'un véhicule automobile électrique ou hybride, comprenant un boîtier défini précédemment.

L'invention porte encore sur un véhicule automobile, notamment à motorisation électrique ou hybride, comprenant un pack batterie d'alimentation de puissance défini précédemment ou un boîtier défini précédemment.

L'invention porte enfin sur un procédé d'introduction d'un fluide d'extinction dans un boîtier défini précédemment, comprenant une étape d'application d'une surpression sur le dispositif d'obturation de sorte à entraîner le détachement de l'opercule.

La surpression peut être obtenue par une force exercée par de l'eau éjectée d'une lance à incendie et dirigée vers le dispositif d'obturation.

Les dessins annexés représentent, à titre d'exemple, un mode de réalisation d'un boîtier selon l'invention.
[Fig. 1] La figure 1 est une vue en coupe représentant un mode de réalisation d'un boîtier pour une batterie, le moyen d'étanchéité comprenant une feuille.
[Fig. 2] La figure 2 est une vue en perspective représentant un mode de réalisation d'un boîtier pour une batterie.
[Fig. 3] La figure 3 est une vue en perspective éclatée correspondant à la figure 2.
[Fig. 4] La figure 4 est une vue en coupe représentant un autre mode de réalisation d'un boîtier pour une batterie, le moyen d'étanchéité comprenant des crochets.
[Fig. 5] La figure 5 est une vue en coupe représentant une variante de réalisation d'un boîtier pour une batterie, le moyen d'étanchéité comprenant un ressort.

L'invention propose de munir le boîtier d'une batterie d'un opercule configuré pour se détacher lorsqu'une surpression s'exerce sur sa surface située du côté extérieur du boîtier. L'invention permet, en cas d'incendie de la batterie, d'utiliser une force exercée par de l'eau éjectée d'une lance à incendie et dirigée vers l'opercule pour le détacher et introduire un fluide d'extinction à l'intérieur du boîtier.

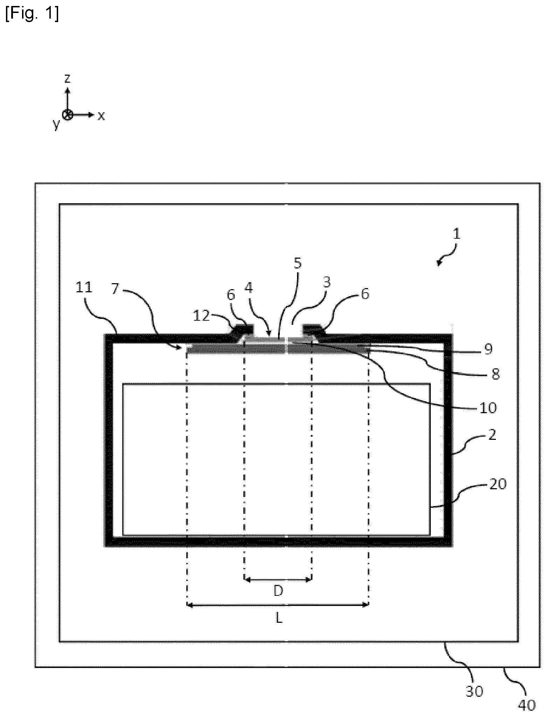

Un mode de réalisation d'un boîtier 1 pour une batterie est décrit ci-après en référence aux figures 1, 2 et 3.

Le boîtier 1 est destiné à entourer et/ou à servir d'enveloppe, notamment de protection, pour une batterie 20. Une telle batterie est par exemple une batterie d'alimentation de puissance d'un véhicule à motorisation électrique ou hybride. Une telle batterie est par exemple de type Lithiumion (Li-ion).

Par « batterie », on entend une batterie ou un ensemble de modules batterie.

Par « pack batterie », on entend un ensemble comprenant un boîtier et au moins une batterie disposée à l'intérieur du boîtier.

Par surface ou paroi « interne» ou « intérieure », on entend une surface ou paroi située, ou faisant face, à l'intérieur du boîtier 1. Par surface ou paroi « externe» ou « extérieure », on entend une surface ou paroi située à l'extérieur du boîtier 1.

Par « utilisation normale» ou « usage normal» du boîtier 1, on entend une utilisation ou un usage du boîtier 1 en l'absence de feu ou d'incendie, notamment en fonctionnement normal d'une batterie.

Le boîtier 1 comprend une enveloppe 2, ou carter.

Le boîtier 1 comprend un dispositif d'obturation 4 destiné à être monté à l'emplacement d'une ouverture 3 ménagée dans l'enveloppe 2, par exemple dans un carter supérieur 11 d'une batterie ou couvercle 11.

Le carter supérieur 11 est par exemple une plaque métallique, par exemple cataphorésée. L'épaisseur du carter supérieur 11 est par exemple de l'ordre de 0,8 mm.

De préférence, l'ouverture 3 peut être de forme circulaire. D'autres formes pourront également être prévues pour l'ouverture 3, par exemple oblongue ou rectangulaire.

Le diamètre de l'ouverture 3 pourra être choisi de sorte à correspondre sensiblement au diamètre du jet d'eau d'une lance à incendie des pompiers.

Le diamètre de l'ouverture 3 est par exemple de l'ordre de 50 mm.

Avantageusement, l'enveloppe 2 peut présenter une portion 12 en forme de cheminée à l'emplacement de l'ouverture 3.

Avantageusement, le dispositif d'obturation 4 et l'ouverture 3 correspondante sont situés à un emplacement de l'enveloppe 2 directement accessible depuis l'extérieur du véhicule. Il en résulte que les pompiers, en cas d'incendie, peuvent remplir le boîtier 1 avec un fluide d'extinction sans avoir à trop s'approcher du véhicule.

Le dispositif d'obturation 4 comprend un opercule 5.

L'opercule 5 présente par exemple la forme d'un disque.

D'autres formes pourront être prévues pour l'opercule 5. La forme et les dimensions de l'opercule 5 sont choisies de sorte à obturer l'ouverture 3.

De préférence, on choisira pour l'opercule 5 un matériau résistant aux températures élevées résultant d'un feu d'une batterie.

Avantageusement, on choisira pour l'opercule 5 un matériau ayant des propriétés isolantes vis-à-vis des perturbations électromagnétiques émises ou subies par les éléments internes au boîtier 1. **Il** en résulte qu'un tel opercule 5, outre son rôle de moyen d'obturation de l'ouverture et donc de confinement à l'intérieur du boîtier 1, présente également le rôle de blindage électromagnétique en usage normal du boîtier 1.

L'opercule 5 comprend par exemple un matériau métallique.

L'opercule 5 est par exemple en acier, par exemple en acier de type DX54, qui n'est pas thermofusible puisqu'il résiste à de très hautes températures, sa température de fusion étant de l'ordre de 1500°C, ou en aluminium.

Avantageusement, l'opercule 5 est cataphorésé.

De préférence, le diamètre de l'opercule 5 est supérieur ou égal au diamètre de l'ouverture 3 de l'enveloppe 2.

Le diamètre de l'opercule 5 est par exemple supérieur ou égal au diamètre du jet d'une lance à incendie des pompiers, qui est de l'ordre de 50 mm en jet baton.

Le diamètre D de l'opercule 5 est par exemple compris entre 50 mm et 100 mm, par exemple de l'ordre de 80 mm.

L'épaisseur de l'opercule 5 est par exemple comprise entre 200 micromètre et 10 mm, par exemple de l'ordre de 5 mm.

Le diamètre D de l'opercule 5 correspond aux dimensions de l'opercule 5 dans le plan (x,y), et l'épaisseur de l'opercule 5 correspond à sa dimension selon la direction z. Le repère (x, y, z) est un repère orthonormé. Le plan (x, y) correspond à la surface principale du carter supérieur 11.

En usage normal du boîtier 1, l'opercule 5 permet d'obturer par l'intérieur l'ouverture 3 de l'enveloppe 2. En cas d'incendie, l'opercule 5 correspond à la portion du dispositif d'obturation 4 destinée à se détacher, de façon contrôlée et à un instant bien choisi, sous l'effet d'une surpression exercée sur sa surface externe située du côté extérieur du boîtier, par exemple par le jet d'une lance à incendie.

En usage normal du boîtier 1, l'opercule 5 est fixé sur une portion de la surface interne de l'enveloppe 2.

Les bords de l'opercule 5 peuvent également être entourés par une portion de l'enveloppe 2 dans le cas où une cheminée 12 est présente à l'emplacement de l'ouverture 3.

L'opercule 5 est par exemple fixé sur l'enveloppe 2 par collage par un adhésif 6.

L'adhésif 6 présente des dimensions adaptées à celles de l'opercule 5.

L'adhésif 6 présente par exemple la forme d'un anneau, de diamètre interne par exemple sensiblement égal à celui de l'ouverture 3, et de diamètre externe par exemple sensiblement égal à celui de l'opercule 5.

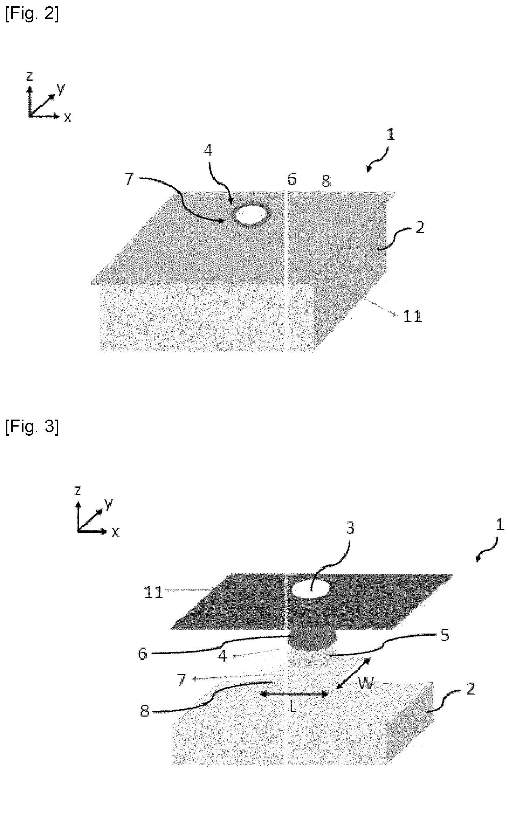

D'autres formes et dimensions pourront être prévues pour l'adhésif 6, par exemple une forme de disque comme illustré en figure 3.

L'adhésif 6 est par exemple de type Tesa 7072.

L'adhésif 6 est destiné à résister à toutes les phases de vie classiques de la batterie (chocs thermiques, vibrations, étanchéité ... ). Ceci permet de garantir, en usage normal du boîtier 1, le maintien de la fixation de l'opercule 5 de façon étanche sur l'enveloppe 2, afin d'obturer l'ouverture 3.

En cas d'incendie du véhicule se propageant à la batterie, ou dans le cas très improbable d'un emballement thermique interne de la batterie, l'adhésif 6 est configuré pour perdre ses propriétés de tenue mécanique avec l'augmentation de température interne. Les dimensions de l'adhésif 6 sont en outre choisies pour permettre un détachement de l'opercule 5 lorsqu'une surpression s'exerce sur sa surface externe située du côté extérieur du boîtier.

Les dimensions de l'adhésif 6 sont choisies pour permettre un détachement de l'opercule 5 lorsqu'une force de l'ordre de 130 N s'exerce sur sa surface externe située du côté extérieur du boîtier, et après une exposition à une température d'environ 200 oC pendant 15 min. Une telle force correspond à la force minimale exercée par le jet d'une lance à incendie habituellement utilisée par les pompiers.

En cas d'incendie, l'opercule 5 est destiné à se détacher, de façon contrôlée et à un instant bien choisi, sous l'effet d'une force exercée par un fluide d'extinction, notamment de l'eau, éjecté d'une lance à incendie, ce qui permet de dégager l'ouverture 3 de l'enveloppe 2 et d'introduire le fluide d'extinction à l'intérieur du boîtier 1.

Le (ou les) matériau(x) et les dimensions de l'opercule 5 et de l'adhésif 6 seront notamment choisis de sorte que l'opercule 5 puisse se détacher dans le cas d'une force exercée sur la surface externe de l'opercule 5 par le jet d'eau d'une lance à incendie de pompiers, correspondant par exemple à une pression de l'ordre de 6 bars au niveau du camion des pompiers.

Selon un exemple de réalisation, l'opercule 5 peut être en acier, et présenter un diamètre de l'ordre de 80 mm et une épaisseur de l'ordre de 0,8 mm, et être calibré pour se détacher sous une force exercée sur sa surface externe de l'ordre de 130 N.

Le dispositif d'obturation 4 comprend en outre un moyen d'étanchéité 7 disposé à l'intérieur du boîtier 1 sous l'opercule 5 et fixé à l'enveloppe 2.

Le moyen d'étanchéité 7 est destiné à assurer une fermeture de l'ouverture 3 de l'enveloppe 2 du boîtier 1 de façon hermétique ou étanche.

Le moyen d'étanchéité 7 permet par exemple d'assurer une fermeture de l'ouverture 3 de l'enveloppe 2 du boîtier 1 de façon étanche en cas de dégradation de l'adhésif 6 de fixation de l'opercule 5 sur l'enveloppe 2.

Le moyen d'étanchéité 7 permet par exemple d'assurer l'étanchéité du boîtier 1 en cas de dégradation trop rapide de l'adhésif 6, ou dans le cas où on souhaite maintenir l'étanchéité du boîtier 1 pour une durée supérieure à 15 min après une exposition à une température interne élevée entraînant la perte des propriétés de tenue mécanique de l'adhésif 6.

Selon un premier exemple de réalisation, le moyen d'étanchéité 7 peut comprendre une feuille 8 ou plaque.

La feuille 8 comprend par exemple du Mica, par exemple du Mica composite, qui n'est pas thermofusible puisqu'il résiste à des températures très élevées de l'ordre de 1000°C sans perdre ses propriétés mécaniques.

La feuille 8 est disposée à l'intérieur du boîtier 1 sous l'opercule 5 et fixée à l'enveloppe 2.

La feuille 8 peut être fixée par collage par un autre adhésif 9 sur l'enveloppe 2, notamment sur la face intérieure de l'enveloppe 2 où est ménagée l'ouverture 3.

La feuille 8, fixée par l'adhésif 9 à l'enveloppe 2 et disposée sous l'opercule 5, est destinée à limiter la chaleur au niveau de l'adhésif 6 de fixation de l'opercule 5 en cas d'incendie à l'intérieur du boîtier 1. La feuille 8 joue le rôle d'écran thermique. La feuille 8 est configurée pour résister à de très fortes températures et même au feu. En cas d'incendie, la feuille 8 devient cassante mais ne bruie pas, assurant ainsi la fonction d'écran thermique.

La feuille 8 présente par exemple une forme rectangulaire ou carrée. D'autres formes peuvent être prévues pour la feuille 8.

Avantageusement, la longueur L et la largeur W de la feuille 8 sont supérieures au diamètre D de l'opercule 5. Par longueur **L,** on entend la dimension de la feuille 8 dans la direction longitudinale x, et par largeur W, on entend la dimension de la feuille 8 dans la direction transversale y. La feuille 8 peut ainsi être fixée sur la surface interne de l'enveloppe 2 autour de l'opercule 5.

La longueur L de la feuille 8 est par exemple comprise entre 10 mm et 200 mm, par exemple de l'ordre de 130 mm. La largeur W de la feuille 8 est par exemple comprise entre 10 mm et 200 mm, par exemple de l'ordre de 130 mm.

L'adhésif 9 est par exemple en silicone ou de type Tesa 4965. On choisira pour l'adhésif 9 un matériau résistant à de très fortes températures et même au feu.

Avantageusement, un embouti dans l'enveloppe 2, par exemple en forme de cheminée 12, autour de l'ouverture 3 permet de maintenir une couche d'air 10 entre la feuille 8 et l'opercule 5. Ceci permet de retarder la propagation de la chaleur en cas de température interne élevée du boîtier 1.

L'épaisseur de la couche d'air 10 est par exemple de l'ordre de 4 mm.

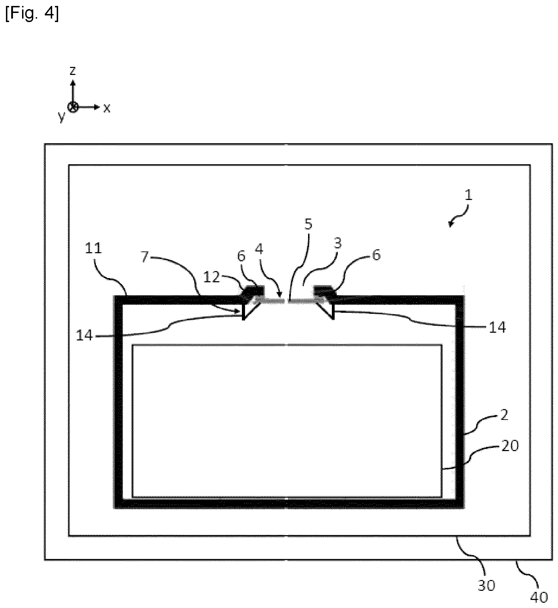

Selon un deuxième exemple de réalisation, le moyen d'étanchéité 7 peut comprendre au moins un crochet 14 comme illustré sur la figure 4. Des éléments similaires à ceux des figures 1 à 3 sont désignés par les mêmes références sur la figure 4 et ne sont pas décrits à nouveau ci-après.

Avantageusement, le moyen d'étanchéité 7 peut être positionné en un point ou en deux points sous l'opercule 5 fixé par l'adhésif 6 à l'enveloppe 2.

Le moyen d'étanchéité 7 comprend par exemple deux crochets 14. Les crochets 14 sont par exemple disposés sous l'opercule 5 de part et d'autre de l'opercule 5, par exemple de façon diamétralement opposée, par exemple selon la direction longitudinale x. D'autres positionnements d'un ou plusieurs crochets pourront bien entendu être prévus.

En usage normal du boîtier 1, l'opercule 5 est maintenu par l'adhésif 6 et aucune contrainte n'est appliquée à ce (ou ces) crochets 14 par l'opercule 5.

En cas d'incendie, si l'adhésif 6 se dégrade trop et ne maintient plus suffisamment l'opercule 5, l'opercule 5 est alors maintenu par l'au moins un crochet 14. L'étanchéité du boîtier 1 reste ainsi assurée.

Afin de garantir la possibilité de dégagement de l'ouverture 3 par le jet d'une lance à incendie, l'au moins un crochet 14 est configuré pour s'ouvrir sous une force de 130 **N,** correspondant à la force minimale fournie par le jet d'une lance à incendie habituellement utilisée par les pompiers. Ceci permet de libérer l'opercule 5 et donc de dégager l'ouverture 3.

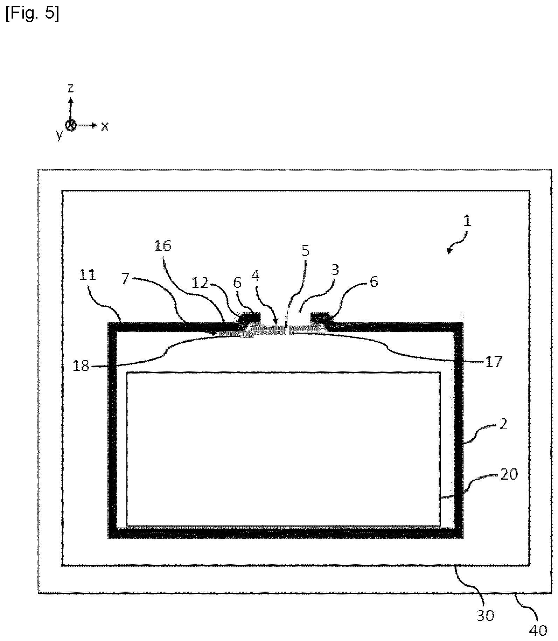

Selon un troisième exemple de réalisation, le moyen d'étanchéité 7 peut comprendre un ressort 16 comme illustré sur la figure 5. Des éléments similaires à ceux des figures 1 à 3 sont désignés par les mêmes références sur la figure 5 et ne sont pas décrits à nouveau ci-après.

Le ressort 16 peut être positionné sous l'opercule 5 fixé par l'adhésif 6 à l'enveloppe 2.

Une portion du ressort 16 est par exemple fixée sur la face intérieure de l'enveloppe 2 où est ménagée l'ouverture 3. Une autre portion du ressort 16 est par exemple en appui sur l'opercule 5.

Le ressort 16 est par exemple une lamelle ressort élastique.

La lamelle 16 peut comprendre une partie plate 17 et une zone de fragilisation 18. La zone de fragilisation 18 est destinée à rompre ou à se déformer plastiquement lorsqu'une force est exercée sur l'opercule 5.

A la place d'un ressort 16, le moyen d'étanchéité 7 pourra comprendre un autre moyen de rappel élastique. Un ou plusieurs moyens de rappel élastique pourront être prévus.

En usage normal du boîtier 1, l'opercule 5 est maintenu par l'adhésif 6.

En cas d'incendie, si l'adhésif 6 se dégrade trop et ne maintient plus suffisamment l'opercule 5, l'opercule de rupture 5 est alors maintenu par le ressort 16. L'étanchéité du boîtier 1 reste ainsi assurée.

Afin de garantir la possibilité de dégagement de l'ouverture 3 par le jet d'une lance à incendie, le ressort 16 est configuré pour libérer l'opercule 5 sous une force de 130 N, correspondant à la force minimale fournie par le jet d'une lance à incendie habituellement utilisée par les pompiers. L'opercule 5 est extrait de l'ouverture 3 grâce à la force de rappel élastique fournie par le ressort 16, en réaction à la force exercée par le jet d'une lance à incendie. La zone de fragilisation 18 de la lamelle 16 rompt ou se déforme plastiquement sous l'effet de la force exercée sur l'opercule 5, ce qui permet de libérer l'opercule 5.

Selon un autre exemple de réalisation d'un boîtier, le moyen d'étanchéité 7 peut comprendre au moins crochet 14 et un ressort 16. Autrement dit, les exemples de réalisation des figures 4 et 5 peuvent être combinés.

Un avantage d'un boîtier du type de celui décrit en relation avec les figures 1 à 5 est lié au fait que le dispositif d'obturation 4 forme, en utilisation normale du boîtier 1, un blindage électromagnétique efficace, simple à mettre en œuvre et présentant un coût réduit. Le dispositif d'obturation 4 permet de rendre possible l'accès à l'intérieur du boîtier 1 en cas d'incendie tout en jouant un rôle d'isolation contre les perturbations électromagnétiques émises ou subies par les éléments internes au boîtier 1 en usage normal.

L'invention concerne également un pack batterie 30 comprenant un boîtier 1 du type de celui décrit en relation avec les figures 1 à 5. Le pack batterie 30 comprend par exemple en outre au moins une batterie, notamment d'alimentation de puissance d'un véhicule automobile électrique ou hybride.

L'invention concerne en outre un véhicule automobile 40, notamment à motorisation électrique ou hybride, comprenant un boîtier 1 du type de celui décrit en relation avec les figures 1 à 5 ou un pack batterie 30 du type de celui décrit ci-dessus.

Un autre avantage d'un boîtier du type de celui décrit en relation avec les figures 1 à 5 réside dans le fait qu'il permet, en cas d'incendie d'une batterie, d'empêcher l'entrée de fumées et du feu dans l'habitacle du véhicule en résistant aux températures élevées des fumées et du feu. **Il** en résulte une sécurité accrue des passagers.

Un boîtier du type de celui décrit en relation avec les figures 1 à 5 permet par exemple d'empêcher l'entrée de fumées et du feu dans l'habitacle pendant au moins 5 minutes après une détection d'emballement thermique d'une batterie. Ceci permet aux passagers de sortir ou d'être extraits du véhicule avant l'entrée de fumées et du feu dans l'habitacle.

Un autre avantage d'un boîtier du type de celui décrit en relation avec les figures 1 à 5 réside dans le fait qu'il permet de fournir un dispositif efficace d'introduction d'un fluide d'extinction dans un boîtier d'une batterie, utile aux pompiers en cas de feu, tout en améliorant l'efficacité du blindage électromagnétique en usage normal, par rapport aux dispositifs d'extinction de feu d'une batterie connus de l'art antérieur.

Un autre avantage d'un boîtier du type de celui décrit en relation avec les figures 1 à 5 réside dans son coût réduit.

Un mode d'exécution d'un procédé d'introduction d'un fluide d'extinction dans un boîtier pour une batterie du type de celui décrit en relation avec les figures 1 à 5 est décrit ci-après. Un tel procédé peut par exemple être utilisé par des pompiers pour éteindre un incendie d'une batterie.

L'invention propose un procédé permettant, en cas d'incendie d'une batterie, d'utiliser la force exercée par le jet d'une lance à incendie pour entraîner le détachement de l'opercule 5 du dispositif d'obturation 4 et ainsi dégager l'ouverture 3 de l'enveloppe 2 du boîtier 1. Il en résulte le dégagement d'un accès direct à l'intérieur du boîtier 1 pour que les pompiers puissent remplir le boîtier 1 d'un fluide d'extinction, notamment de l'eau, et « noyer» la batterie 20 pour éteindre le feu.

Le procédé comprend une étape d'application d'une surpression sur le dispositif d'obturation 4 de sorte à entraîner le détachement de l'opercule 5.

La surpression est par exemple obtenue par une force exercée par de l'eau éjectée d'une lance à incendie et dirigée vers le dispositif d'obturation 4.

L'opercule 5 se détache lorsque la force exercée par le fluide d'extinction présente une valeur seuil ou minimale prédéterminée. La valeur seuil ou minimale prédéterminée de la force exercée peut être choisie selon l'application, les moyens de détachement à disposition et la contrepression interne à laquelle le dispositif doit résister. Selon un exemple de réalisation, la valeur seuil ou minimale prédéterminée de la force exercée peut être de l'ordre de 130 N.

L'opercule 5 qui s'est détaché permet de dégager l'ouverture 3, ce qui permet l'introduction du fluide d'extinction dans le boîtier 1.

Un avantage d'un procédé d'introduction d'un fluide d'extinction dans un boîtier pour une batterie du type de celui décrit ci-dessus réside dans le fait que les pompiers peuvent éteindre un incendie d'une batterie tout en restant à une certaine distance du véhicule ou du boîtier. Il en résulte que l'intervention des pompiers est moins risquée.

Un autre avantage d'un procédé d'introduction d'un fluide d'extinction du type de celui décrit ci-dessus réside dans le fait qu'il permet d'utiliser la force exercée par un jet d'eau d'une lance à incendie dans son état le plus couramment utilisé, par exemple correspondant à une pression de l'ordre de 6 bars au niveau du camion des pompiers. Un jet d'eau d'une lance à incendie présentant une telle pression est couramment utilisé par tous les pompiers du monde. Il en résulte qu'un tel procédé ne requiert aucun aménagement particulier des équipements des pompiers.

Un autre avantage d'un procédé d'introduction d'un fluide d'extinction du type de celui décrit ci-dessus réside dans le fait que le dégagement de l'ouverture 3 de l'enveloppe 2 du boîtier 1 est réalisé de façon contrôlée. Un tel contrôle de l'instant de dégagement de l'ouverture permet d'éviter l'entrée dans l'habitacle de fumées et/ou du feu confinés dans la batterie, avant que d'éventuels passagers aient pu sortir du véhicule.

Il a été décrit en relation avec les figures 1 à 5 un boîtier 1 comprenant un dispositif d'obturation 4. Bien entendu, plusieurs dispositifs d'obturation 4, et plusieurs ouvertures 3 associées, pourront être prévus pour un même boîtier 1. Ceci permettrait d'optimiser pour les pompiers l'accès rapide et simple à au moins un dispositif d'obturation 4, par exemple en cas d'accident de la route.

En variante, un boîtier 1 pour une batterie du type de celui décrit ci-dessus pourrait en outre comprendre d'autres dispositifs, dits dispositifs de « Fireman Access », permettant de donner accès à l'intérieur du boîtier 1 pour l'introduction d'un fluide d'extinction par les pompiers, par exemple les dispositifs « Fireman access » désignent des dispositifs comprenant une zone sécable ou thermo-fusible, notamment disposés du côté de l'interface avec le châssis du véhicule.

**Il** a été décrit en relation avec les figures 1 à 5 un boîtier 1 notamment destiné à entourer une batterie d'alimentation de puissance d'un véhicule automobile, notamment une batterie de type Lithium-ion (Li-ion). Un tel boîtier 1 pourra être utilisé pour toutes applications comportant une batterie à électrolyte inflammable, susceptible d'être soumise à un risque incendie, notamment dans les domaines de l'automobile, du stockage d'énergie stationnaire et de l'aviation, afin de faciliter l'intervention des services de secours.

Un procédé d'introduction d'un fluide d'extinction dans un boîtier 1 pour une batterie a été décrit ci-dessus dans le cas de l'utilisation d'eau comme fluide d'extinction. Bien entendu, d'autres fluides d'extinction que l'eau pourront être utilisés.

## Revendications

1. Boîtier (1) pour une batterie, comprenant une enveloppe (2) et au moins un dispositif d'obturation (4) muni d'un opercule (5) fixé sur l'enveloppe à l'emplacement d'une ouverture (3) ménagée dans l'enveloppe, l'opercule (5) étant collé sur l'enveloppe par un adhésif (6), l'adhésif étant configuré pour perdre ses propriétés de tenue mécanique lorsqu'une force de 130N s'exerce sur sa surface externe située du côté extérieur du boîtier, et après une exposition à une température d'environ 200°C pendant 15 min, pour permettre le détachement de l'opercule, le dispositif d'obturation (4) comprenant en outre un moyen d'étanchéité (7) disposé à l'intérieur du boîtier (1) sous l'opercule (5),

2. Boîtier selon la revendication 1, dans lequel le moyen d'étanchéité (7) comprend une feuille (8) comprenant du Mica.

3. Boîtier selon la revendication 2, dans lequel la feuille (8) est collée par un autre adhésif (9) sur la face intérieure de l'enveloppe (2) où est ménagée l'ouverture (3).

4. Boîtier selon la revendication 2 ou 3, dans lequel une couche d'air (10) est maintenue entre la feuille (8) et l'opercule (5), l'épaisseur de la couche d'air (10) étant par exemple de l'ordre de 4 mm.

5. Boîtier selon la revendication 1, dans lequel le moyen d'étanchéité (7) comprend au moins un crochet (14) et/ou au moins un moyen de rappel élastique, par exemple un ressort (16).

6. Boîtier selon la revendication 5, dans lequel l'au moins un crochet (14) et/ou l'au moins un moyen de rappel élastique (16) est configuré pour libérer l'opercule (5) lorsqu'une force supérieure à un seuil prédéfini, notamment 130 N, s'exerce sur la surface externe du dispositif d'obturation (4) située du côté extérieur du boîtier.

7. Pack batterie (30), notamment d'alimentation de puissance d'un véhicule automobile électrique ou hybride, comprenant un boîtier (1) selon l'une quelconque des revendications précédentes.

8. Véhicule automobile (40), notamment à motorisation électrique ou hybride, comprenant un pack batterie (30) d'alimentation de puissance selon la revendication précédente ou un boîtier (1) selon l'une quelconque des revendications 1 à 6.

9. Procédé d'introduction d'un fluide d'extinction dans un boîtier (1) selon l'une quelconque des revendications 1 à 6, comprenant une étape d'application d'une surpression sur le dispositif d'obturation (4) de sorte à entraîner le détachement de l'opercule (5).

10. Procédé d'introduction d'un fluide d'extinction dans un boîtier (1) selon la revendication précédente, dans lequel la surpression est obtenue par une force exercée par de l'eau éjectée d'une lance à incendie et dirigée vers le dispositif d'obturation (4).

## Patentansprüche

1. Gehäuse (1) für eine Batterie, welches eine Hülle (2) und mindestens eine Verschlussvorrichtung (4), die mit einem an der Hülle an der Stelle einer in der Hülle ausgebildeten Öffnung (3) befestigten Verschlussdeckel (5) ausgestattet ist, umfasst, wobei der Verschlussdeckel (5) mit einem Klebstoff (6) auf die Hülle geklebt ist, wobei der Klebstoff dafür ausgelegt ist, seine mechanischen Halteeigenschaften zu verlieren, wenn eine Kraft von 130 N auf seine auf der Außenseite des Gehäuses befindliche äußere Fläche ausgeübt wird, und nach einer 15 min dauernden Exposition gegenüber einer Temperatur von ungefähr 200 °C, um das Lösen des Verschlussdeckels zu ermöglichen, wobei die Verschlussvorrichtung (4) außerdem ein Dichtmittel (7) umfasst, das im Inneren des Gehäuses (1) unter dem Verschlussdeckel (5) angeordnet ist.

2. Gehäuse nach Anspruch 1, wobei das Dichtmittel (7) eine Folie (8) umfasst, welche Glimmer umfasst.

3. Gehäuse nach Anspruch 2, wobei die Folie (8) mit einem anderen Klebstoff (9) auf die Innenseite der Hülle (2) geklebt ist, wo die Öffnung (3) ausgebildet ist.

4. Gehäuse nach Anspruch 2 oder 3, wobei eine Luftschicht (10) zwischen der Folie (8) und dem Verschlussdeckel (5) gehalten wird, wobei die Dicke der Luftschicht (10) zum Beispiel in der Größenordnung von 4 mm liegt.

5. Gehäuse nach Anspruch 1, wobei das Dichtmittel (7) mindestens einen Haken (14) und/oder mindestens ein elastisches Rückholmittel, zum Beispiel eine Feder (16), umfasst.

6. Gehäuse nach Anspruch 5, wobei der mindestens eine Haken (14) und/oder das mindestens eine elastische Rückholmittel (16) dafür ausgelegt ist, den Verschlussdeckel (5) freizugeben, wenn eine Kraft, die größer als ein vordefinierter Schwellenwert ist, insbesondere als 130 N, auf die auf der Außenseite des Gehäuses befindliche äußere Fläche der Verschlussvorrichtung (4) ausgeübt wird.

7. Batteriepack (30), insbesondere zur Leistungsversorgung eines elektrischen oder hybriden Kraftfahrzeugs, welches ein Gehäuse (1) nach einem der vorhergehenden Ansprüche umfasst.

8. Kraftfahrzeug (40), insbesondere mit elektrischer oder hybrider Motorisierung, welches ein Batteriepack (30) zur Leistungsversorgung nach dem vorhergehenden Anspruch oder ein Gehäuse (1) nach einem der Ansprüche 1 bis 6 umfasst.

9. Verfahren zur Einbringung eines Löschfluids in ein Gehäuse (1) nach einem der Ansprüche 1 bis 6, welches einen Schritt der Anwendung eines Überdrucks auf die Verschlussvorrichtung (4) umfasst, um so das Lösen des Verschlussdeckels (5) zu bewirken.

10. Verfahren zur Einbringung eines Löschfluids in ein Gehäuse (1) nach dem vorhergehenden Anspruch, wobei der Überdruck durch eine Kraft erzielt wird, die durch Wasser ausgeübt wird, das aus einem Feuerwehrschlauch gespritzt wird und auf die Verschlussvorrichtung (4) gerichtet ist.

## Claims

1. Housing (1) for a battery, comprising an enclosure (2) and at least one closure device (4) provided with a cover (5) fastened to the enclosure at the location of an opening (3) formed in the enclosure, the cover (5) being adhesively bonded to the enclosure by an adhesive (6), the adhesive being configured to lose its mechanical strength properties when a force of 130 N is exerted on its external surface situated on the outer side of the housing, and after exposure to a temperature of approximately 200°C for 15 mins, to allow the detachment of the cover, the closure device (4) further comprising a sealing means (7) disposed inside the housing (1) beneath the cover (5).

2. Housing according to Claim 1, wherein the sealing means (7) comprises a sheet (8) comprising mica.

3. Housing according to Claim 2, wherein the sheet (8) is adhesively bonded by another adhesive (9) to the inner face of the enclosure (2) where the opening (3) is formed.

4. Housing according to Claim 2 or 3, wherein a layer of air (10) is maintained between the sheet (8) and the cover (5), the thickness of the layer of air (10) being for example of the order of 4 mm.

5. Housing according to Claim 1, wherein the sealing means (7) comprises at least one hook (14) and/or at least one elastic return means, for example a spring (16).

6. Housing according to Claim 5, wherein the at least one hook (14) and/or the at least one elastic return means (16) is configured to release the cover (5) when a force greater than a predefined threshold, in particular 130 N, is exerted on the external surface of the closure device (4) situated on the outer side of the housing.

7. Battery pack (30), notably for supplying power to an electric or hybrid motor vehicle, comprising a housing (1) according to any one of the preceding claims.

8. Motor vehicle (40), notably an electrically-powered or hybrid-powered motor vehicle, comprising a power supply battery pack (30) according to the preceding claim or a housing (1) according to any one of Claims 1 to 6.

9. Method for introducing an extinguishing fluid into a housing (1) according to any one of Claims 1 to 6, comprising a step of applying an overpressure to the closure device (4) so as to cause the detachment of the cover (5).

10. Method for introducing an extinguishing fluid into a housing (1) according to the preceding claim, wherein the overpressure is obtained by a force exerted by water ejected from a fire hose nozzle and directed towards the closure device (4).
